# EUROPÄISCHE PATENTSCHRIFT

(11) **EP 3 207 217 B1**
(45) Veröffentlichungstag und Bekanntmachung des Hinweises auf die Patenterteilung: **10.10.2018**
(21) Anmeldenummer: 15810639.3
(22) Anmeldetag: 16.12.2015
(51) Int. Cl.: F01D 5/18, F01D 5/20

(54) **FILMGEKÜHLTES GASTURBINENBAUTEIL**
FILM-COOLED GAS TURBINE COMPONENT
COMPOSANT DE TURBINE À GAZ REFROIDI PAR COUCHE D'AIR

(30) Priorität: 09.01.2015 EP 15150577
(43) Veröffentlichungstag der Anmeldung: 23.08.2017
(73) Patentinhaber: Siemens Aktiengesellschaft, 80333 München (DE)
(72) Erfinder: HESELHAUS, Andreas, 40235 Düsseldorf (DE)
(86) Internationale Anmeldenummer: PCT/EP2015/079998
(87) Internationale Veröffentlichungsnummer: WO 2016/110387

(56) Entgegenhaltungen:
- WO-A2-2013/188645
- US-A- 4 653 983

## Beschreibung

Die Erfindung betrifft ein gekühltes Gasturbinenbauteil für eine Gasturbine, mit einer einem Heißgas aussetzbaren Oberfläche, in der eine Anzahl von Filmkühlöffnungen münden, die in einer Richtung quer zu einer Strömungsrichtung des Heißgases zu zumindest einer Reihe zusammenfassbar sind, wobei jede der betreffenden Filmkühlöffnungen längs seiner Durchströmungsrichtung einen Kanalabschnitt und einen sich an den Kanalabschnitt unmittelbar anschließenden Diffusorabschnitt umfassend eine stromauf angeordnete Diffusorkante, zwei Diffusor-Längskanten und eine stromab angeordnete Diffusorkante aufweisen, wobei jede Längskante mit der stromab angeordneten Diffusorkante in einem Eckbereich zusammentrifft.

Im Stand der Technik sind viele unterschiedliche Gasturbinenbauteile bekannt, welche die eingangs beschriebenen Filmkühlöffnungen aufweisen. So offenbart beispielsweise die WO 2013/188645 eine Turbinenschaufel mit Filmkühlöffnungen, deren diffusorartiger Bereich in zwei durch einen Rippe getrennte Flügelbereiche übergeht. Weiter ist aus der US 4 653 983 ein Filmkühlloch bekannt, welches gegenüber der lokalen Strömungsrichtung des Heißgases lateral angestellt und dessen Diffusor asymmetrisch ausgebildet ist. All diese Filmkühlöffnungen werden bekanntermaßen mit dem Ziel eingesetzt, eine vorzeitige Schädigung des Materials bzw. des Gasturbinenbauteils zu vermeiden, damit die vorbestimmte Lebensdauer erreicht wird. Im Detail soll mit Hilfe der Filmkühlöffnungen ein flächiger Kühlfilm über die Oberfläche des Gasturbinenbauteils bereitgestellt werden, um während des Betriebs die Oberfläche vor den schädlichen Einflüssen des daran entlang strömenden Heißgases zu schützen. Die zur Ausbildung des Kühlfilms erforderliche Kühlluft muss jedoch bereitgestellt werden. Häufig wird sie dem Kreisprozess der Gasturbine entzogen, so dass der entzogene Anteil nicht an der Energieerzeugung teilnehmen kann. Dies mindert den Wirkungsgrad der Gasturbine, so dass es ebenso das Bestreben gibt, die Kühlluftmenge soweit wie möglich gering zu halten. Zudem besteht das Bedürfnis, die Anzahl der Filmkühllöcher gering zu halten, was neben einer Kühllufteinsparung auch zu einem einfacher herstellbaren und preiswerteren Gasturbinenbauteil führt.

Eine dazu alternative Anordnung ist aus der Veröffentlichung US 2013/0205803 A1 bekannt. Darin ist vorgeschlagen, dass sich die aufweitenden Filmkühllöcher einer Reihe berühren. Dabei berühren sich die Diffusorbereiche längs einer Kante, welche wiederum an den stromab liegenden Querkanten der benachbarten Diffusoren enden. Dies schafft eine lückenlose Reihe von dicht aufeinanderfolgenden Ecken mit dazwischen angeordneten, geradlinigen Diffusorausgangskanten, welche das Schaufelmaterial schwächen kann.

Weiterhin ist es bekannt, dass derartige Filmkühllöcher nicht nur zur flächigen Kühlung des Gasturbinenbauteils eingesetzt werden, sondern auch zur Kühlung einer sogenannten Anstreifkante, die an dem freien Ende einer Turbinenlaufschaufel angeordnet ist und gegenüber einer feststehenden Gehäusewand des Strömungspfades der Gasturbine bewegt wird. Derartige Anstreifkanten sind ebenso den Heißgaseinflüssen ausgesetzt, wobei diese aufgrund ihrer exponierten Stellung - in der Regel ragen sie von einer Wandfläche der Turbinenschaufel, welche quasi parallel zur Strömungspfadbegrenzung der Gasturbine orientiert ist, senkrecht freistehend ab - jedoch vergleichsweise schlecht kühlbar sind.

Insbesondere macht sich im Stand der Technik der Effekt bemerkbar, dass erst mit zunehmender Entfernung von der Filmkühlöffnung die bis dorthin ausgebildeten, individuellen Kühlluftsträhnen sich zu einem flächigen Kühlfilm vereinen. Jedoch aufgrund der inneren Kühlkanalstruktur der Turbinenschaufel und der damit vorgegebenen Position der zur Kühlung der Anstreifkante vorgesehenen Filmkühllöcher waren diese bisher zu nah an der Anstreifkante angeordnet, um einen lückenlosen Kühlfilm auszubilden. Mithin traten - örtlich gesehen - vor dem Vereinen der individuellen Kühlluftsträhnen dazwischen Heißgassträhnen auf, welche lokale Beschädigungen an der Anstreifkante verursachen konnten.

Aus diesem Grunde ist es insbesondere für zur Kühlung von Anstreifkanten eingesetzten Reihen an Filmkühlöffnungen wünschenswert, dass eine längs der Filmkühlreihe flächig durchgängige Kühlung so nah wie möglich stromab der Filmkühlöffnungen erreicht wird.

Aufgabe der Erfindung ist daher die Bereitstellung eines Gasturbinenbauteils mit einer Filmkühlung, bei dem die Ausbildung eines ununterbrochenen Kühlfilms auch für den Bereich zwischen zwei unmittelbar benachbarten Filmkühlöffnungen so nah wie möglich an der stromabwärtigen Kante der Filmkühlöffnungen beginnt.

Zur Lösung dieser Aufgabe schlägt die Erfindung vor, dass bei einem gekühlten Gasturbinenbauteil mit einer einem Heißgas aussetzbaren Oberfläche, in der eine Anzahl von Filmkühlöffnungen mündet, die in einer Richtung quer zu einer lokalen oberflächennahen Strömungsrichtung des Heißgases zu einer Reihe zusammenfassbar sind, wobei jede der betreffenden Filmkühlöffnungen längs seiner Durchströmungsrichtung einen Kanalabschnitt und einen sich an den Kanalabschnitt unmittelbar anschließenden Diffusorabschnitt umfassend eine stromauf angeordnete Diffusorkante, zwei Diffusorlängskanten und eine stromab angeordnete Diffusorkante aufweisen, wobei jede Diffusorlängskante mit der stromab angeordneten Diffusorkante in einem Eckbereich zusammentrifft, zumindest zwei unmittelbar benachbarte, vorzugsweise alle Filmkühlöffnungen der Reihe so ausgestaltet sind, dass deren Kanalachsen der jeweiligen Kanalabschnitte gegenüber der lokalen oberflächennahen Strömungsrichtung des Heißgases lateral angestellt d.h. geneigt sind und deren Diffusorabschnitte jeweils derart asymmetrisch gegenüber einer Verlängerung der Kanalachse ausgebildet sind, dass die unmittelbar benachbarten Eckbereiche unmittelbar benachbarter Filmkühlöffnungen in lokaler Strömungsrichtung des Heißgases betrachtet fluchten oder überlappen, ohne dass die betreffenden Diffusorabschnitte sich berühren. "Lateral" bedeutet dabei, dass die Orientierung der Kanalachse eine Komponente quer zur oberflächennahen Strömungsrichtung des Heißgases aufweist.

Die Asymmetrie der Diffusorabschnitte bezieht sich dabei auf die geradlinige Verlängerung der Kanalachse, welche Verlängerung sich bis zum Ende des Diffusorabschnitts erstreckt.

Der Erfindung liegt die Erkenntnis zugrunde, dass durch die Neigung der Kanalachsen gegenüber der lokalen Strömungsrichtung des Heißgases zwar eine Schrägausblasung der Kühlluft in Bezug auf die Strömungsrichtung des Heißgases erfolgt, dies jedoch zur Ausbildung des schützenden Kühlfilms vollkommen unbeachtlich ist. Dies liegt darin begründet, dass der Impuls der Heißgasströmung so dominant ist, dass die schräg dazu austretende Kühlluft unmittelbar nach dem Verlassen des Diffusorabschnitts die Strömungsrichtung des Heißgases sofort annimmt. Gleichzeitig liegt der Erfindung die Erkenntnis zugrunde, dass zusätzlich zu der lateral angestellten Orientierung der Kanalachsen die Diffusorabschnitte ebenfalls asymmetrisch ausgebildet sein können. Die stromab angeordneten Diffusorkanten können unter Beibehaltung eines moderaten Öffnungswinkels des Diffusors länger sein als bisher, so dass die - senkrecht zur lokalen Strömungsrichtung des Heißgases betrachteten - Abstände der beiden unmittelbar benachbarten Eckbereiche unmittelbar benachbarter Filmkühlöffnungen weitgehend verringert, bestenfalls sogar vermieden werden können, wodurch eine bessere Interaktion der aus benachbarten Filmkühlöffnungen austretenden Kühlluft erreicht werden kann. Insbesondere hat sich als vorteilhaft herausgestellt, dass, wenn die unmittelbar benachbarten Eckbereiche der betreffenden Filmkühlöffnungen in Strömungsrichtung des Heißgases betrachtet fluchten oder überlappen, sich die beiden individuellen Kühlluftströme in unmittelbarer Nähe der stromab angeordneten Diffusorkante zu einem geschlossenen Kühlfilm vereinen. Mit anderen Worten, der Abstand zwischen der stromab angeordneten Diffusorkante und demjenigen davon stromabliegenden Ort, in dem die individuellen Kühlluftströmungen einer jeden Filmkühlöffnung sich zu einem quasi lücklosen und somit flächigen Kühlfilm ausbilden, wird mit Hilfe der Erfindung signifikant verkleinert.

Nebenbei verbessert die vorgeschlagene Erfindung durch die Reduktion des Heißgaseinzugs aufgrund der fehlenden Heißgasbereiche zwischen den einzelnen Strahlen experimentell abgesichert auch die lateral gemittelte Effizienz der Filmkühlung einer Filmkühlreihe, wodurch das Material des Gasturbinenbauteils vor den Heißgaseinflüssen weiter geschützt ist.

Vorteilhafte Ausgestaltungen sind in den Unteransprüchen angegeben, die in beliebiger Weise miteinander kombiniert werden können.

Gemäß einer ersten vorteilhaften Ausgestaltung des Gasturbinenbauteils gleichen die Diffusorabschnitte den Abdrücken eines Diffusorvolumens von der Form eines halbseitigen Pyramidenstumpfes, dessen Volumen zur Ausbildung der Asymmetrie des Diffusorabschnitts um einen Verdrehwinkel um die Kanalachse verdreht ist. Dadurch ist der Diffusor an der anströmseitige Längskante tiefer in die Oberfläche der Schaufel gesenkt als an der anderen Längskante, so dass die sich lateral ausbreitende Kühlluftströmung im Diffusor vor der Schleppwirkung des quer darüber strömenden Heißgases besser als bisher geschützt ist. Diese Verdrehung bewirkt im Detail eine Umverteilung der aus der Filmkühlöffnung strömenden Kühlluft, derart, dass die Luftmenge auch zu demjenigen Eckbereich der betrachteten Filmkühlöffnung geführt wird, der weiter weg vom Kanalabschnitt ist. Durch die fluchtende und ggf. überlappende Anordnung der Eckbereiche zweier benachbarter Diffusoren kann die Reihe als Gesamtes betrachtet nahezu unmittelbar hinter den stromab angeordneten Diffusorkanten einen zumindest weitestgehend lückenlosen und vergleichmäßigten Kühlfilm an Kühlluft ausbilden, ohne dass die im Stand der Technik sich zwischen den Kühlluftsträhnen anfänglich auftretenden Heißgassträhnen noch ausbilden können.

In Experimenten hat sich herausgestellt, dass insbesondere ein Verdrehwinkel von 15° besonders vorteilhaft ist. Nichtsdestotrotz werden ähnliche bzw. gleichwirkende Effekte der Umverteilung der Kühlluft einer einzelnen Filmkühlöffnung auch durch andere Werte als 15° erreicht.

Weiter bevorzugt ist bzw. sind die stromauf angeordnete Diffusorkante, die eine oder beide Diffusor-Längskanten und/oder die stromab angeordnete Diffusorkante des betreffenden Diffusorabschnitts der beiden oder aller Filmkühlöffnungen im Wesentlichen geradlinig ausgebildet. Im Wesentlichen bedeutet dabei, dass ggf. geringfügig verrundete Eckebereiche oder geringfügige Wölbungen aufgrund einer nicht ebenen Oberfläche unbeachtlich sind. Je nach lateralem Oberflächen-, Verdreh- und Öffnungswinkel des Diffusors ist die stromab angeordnete Diffusorkante mehr oder minder quer zur lokalen Strömungsrichtung angeordnet.

Nach einer besonders bevorzugten Ausführungsform schließt die stromab angeordnete Diffusorkante des betreffenden Diffusorabschnitts mit der lokalen Heißgasströmungsrichtung einen Winkel ein, der von 90° abweicht. Vorzugsweise beträgt dieser Winkel 75°. Dies hat zur Folge, dass bei einer Reihe derartiger Filmkühlöffnungen die stromabliegenden Eckbereiche der betreffenden Diffusorabschnitte nicht mehr auf einer einzigen gemeinsamen gedachten Geraden liegen. Vielmehr sind dann zwei parallele gedachte Geraden vorhanden, auf denen entweder die linken Eckbereiche oder die rechten Eckbereiche der betreffenden Diffusorabschnitte angeordnet sind.

Dieser Anordnung liegt die Erkenntnis zu Grunde, dass im Stand der Technik die auf einer einzigen gemeinsamen gedachten Geraden liegenden Eckbereiche eine Art geradlinige Perforationslinie mit vergleichsweise geringem Eckenabstand definieren, entlang welcher Defekte und insbesondere Risse vergleichsweise einfach auftreten können. Gemäß der hier nun bevorzugten Ausgestaltung sind nun die längs der Reihe betrachteten wiederkehrenden Eckbereiche zueinander versetzt angeordnet. Hierdurch ist der Abstand längs der beiden gedachten Geraden zwischen zwei auf der gleichen Geraden liegenden Eckbereiche nunmehr vergrößert worden, was die vorgenannte Schwächung des Schaufelmaterials verringert, ohne dass auf den sich frühzeitig aufbauenden lückenlosen Kühlfilm verzichtet werden muss.

Weiter bevorzugt sind die betreffenden Kanalachsen gegenüber der lokalen wandnahen Strömungsrichtung des Heißgases um einen Anstellwinkel von etwa 50° lateral angestellt. In Experimenten hat sich dieser Winkelbetrag als besonders vorteilhaft herausgestellt, da mit zunehmendem Anstellwinkel auch der Abstand zwischen zwei unmittelbar benachbarten Filmkühlöffnungen vergrößert werden kann, einerseits unter Beibehaltung eines weiterhin effizienten Kühlfilms und andererseits unter Erreichung einer weiterhin stromab ausreichend weit reichenden Filmkühlung.

Besonders bevorzugt ist das Gasturbinenbauteil als innen- und filmgekühlte Turbinenlaufschaufel ausgestaltet mit - entlang einer Radialrichtung aufeinander folgend angeordnet - einem Schaufelfuß, einer Plattform und einem aerodynamisch profilierten Schaufelblatt, welches Schaufelblatt eine Saugseitenwand und eine Druckseitenwand umfasst, die sich beide - in Bezug auf Profilsehnen des Schaufelblatts - von einer Vorderkante des Schaufelblatts zu einer Hinterkante des Schaufelblatts und - in Bezug auf die Radialrichtung - von einem nabenseitigen Ende zu einer frei endenden Schaufelblattspitze erstrecken, wobei an der Schaufelblattspitze zumindest druckseitig eine Anstreifkante vorgesehen ist, wobei zumindest eine der Reihen von Filmkühlöffnungen druckseitig längs der Profilsehne in annähernd konstantem Abstand zur Anstreifkante zu deren Kühlung sind.

Dabei ist insbesondere vorteilhaft, dass mit geringer werdendem Abstand zu der Hinterkante die Abstände zwischen zwei unmittelbar benachbarten Filmkühlöffnungen zunehmen und/oder dass mit geringer werdendem Abstand zu der Hinterkante die Kanalachsen sich immer mehr zur Hinterkante neigen. Insbesondere diese Ausgestaltungermöglicht eine längs der Profilsehne nahezu lückenlose Ausbildung eines Kühlfilms zum vollständigen Schutz der Anstreifkante mit vergleichsweise geringer Anzahl an Filmkühlungsöffnungen, ohne das anfängliche Vorhandensein von kalten und heißen Strähnen. Durch diese lückenlose Filmkühlung kann längs der Profilsehne ein sehr großer Bereich der Anstreifkante flächig und lückenlos gekühlt werden, so dass die im Stand der Technik auftretenden Verschleißerscheinungen vermieden werden können. Da die Positionierung und Orientierung der einzelnen Filmkühlöffnungen längs der Profilsehne erstmalig unter Berücksichtigung der lokalen wandnahen Heißgasströmungsrichtung erfolgt und somit die Abstände zwischen zwei unmittelbar benachbarten Filmkühlöffnungen mit geringer werdendem Abstand zur Hinterkante zunehmen kann, wird eine Filmkühlreihe hier vorgeschlagen, die mit einer geringeren Anzahl an Filmkühlöffnungen auskommt als bisher und dennoch einen wirkungsvolleren Kühlfilm als im Stand der Technik bereitstellen kann. Dies schützt die Anstreifkanten besser, reduziert den Kühlluftverbrauch und lässt sich die Turbinenschaufel dadurch preiswerter herstellen, da die Aufwendungen für das Herstellen einiger Filmkühllöcher eingespart werden können.

Insgesamt betrifft die Erfindung somit ein gekühltes Gasturbinenbauteil für eine Gasturbine, mit einer einem Heißgas aussetzbaren Oberfläche, in der eine Anzahl von Filmkühlöffnungen münden, wobei jede der betreffenden Filmkühlöffnungen längs ihrer Durchströmungsrichtung einen Kanalabschnitt und einen sich an den Kanalabschnitt unmittelbar anschließenden Diffusorabschnitt umfassend eine stromauf angeordnete Diffusorkante, zwei Längskanten und eine stromab angeordnete Diffusorkante aufweisen, wobei jede Längskante mit der stromab angeordneten Diffusorkante in einem Eckbereich zusammentrifft. Um eine besonders wirksame Anordnung von Filmkühlöffnungen bereitzustellen, bei dem der Ort der Vermischung der individuellen Kühlluftsträhnen der einzelnen Filmkühlöffnungen zu einem weitestgehend geschlossenen Kühlluftfilm näher als bisher an der stromab angeordneten Diffusorkante angeordnet ist, wird vorgeschlagen, dass zumindest zwei unmittelbar benachbarte, vorzugsweise alle Filmkühlöffnungen der Reihe so ausgestaltet sind, dass deren Kanalachsen der jeweiligen Kanalabschnitte gegenüber der lokalen wandnahen Strömungsrichtung des Heißgases lateral angestellt sind und deren Diffusorabschnitte jeweils derart asymmetrisch ausgebildet sind, dass die unmittelbar benachbarten Eckbereiche der betreffenden Filmkühlöffnungen in Strömungsrichtung des Heißgases betrachtet fluchten oder überlappen, ohne dass die betreffenden Diffusorabschnitte sich berühren.

Weitere Vorteile und Merkmale der Erfindung werden anhand mehrerer Ausführungsbeispiele in der nachfolgenden Figurenbeschreibung näher erläutert. Es zeigen schematisch:
- FIG 1: eine Turbinenlaufschaufel in einer perspektivischen Darstellung,
- FIG 2: eine Draufsicht auf eine Reihe erfindungsgemäßer Filmkühlöffnungen,
- FIG 3: einen Vergleich der lokalen Filmkühleffektivität von konventionellen und erfindungsgemäßen Filmkühlöffnungen,
- FIG 4: eine Darstellung der unterschiedlich gerichteten wandnahen Heißgasströmungen im Bereich einer Turbinenlaufschaufelspitze und
- FIG 5: die perspektivische Darstellung der Schaufelspitze einer Turbinenlaufschaufel mit erfindungsgemäß ausgestalteten und angeordneten Filmkühlöffnungen.

In allen Figuren sind identische Merkmale mit den gleichen Bezugszeichen versehen.

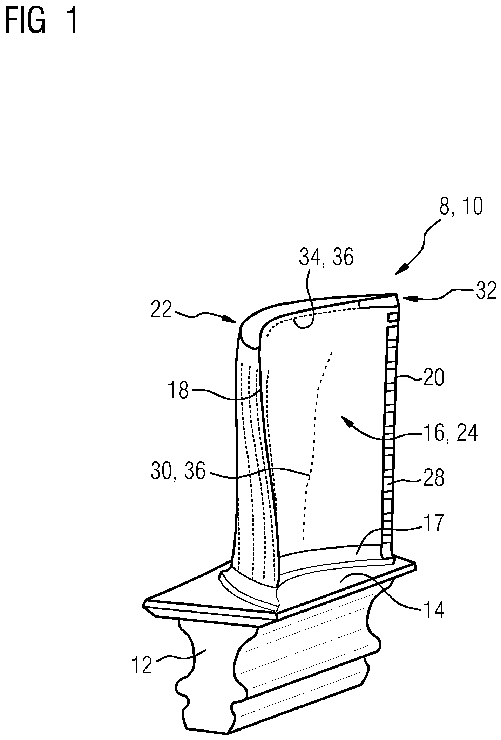

Als nicht einschränkendes Beispiel eines gekühlten Gasturbinenbauteils 8 einer Gasturbine zeigt die FIG 1 eine Turbinenlaufschaufel 10 in perspektivischer Darstellung. Die Turbinenlaufschaufel 10 umfasst einen im Querschnitt tannenbaumförmigen Schaufelfuß 12 sowie eine daran angeordnete Plattform 14. An die Plattform 14 schließt sich ein aerodynamisch profiliertes Schaufelblatt 16 an, welches eine Vorderkante 18 sowie eine Hinterkante 20 aufweist. In Bezug auf die Einbaulage der Turbinenlaufschaufel 10 in der Gasturbine erstreckt sich in radialer Richtung das Schaufelblatt 16 von einem nabenseitigen Ende 17 zu einer Schaufelspitze 32. An der Vorderkante 18 sind als sogenannter "shower head" angeordnete Kühlöffnungen vorgesehen, aus denen ein im Inneren strömendes Kühlmittel, vorzugsweise Kühlluft, austreten kann. Das Schaufelblatt 16 umfasst eine Saugseitenwand 22 sowie eine Druckseitenwand 24. Entlang der Hinterkante 20 ist eine Vielzahl von Hinterkantenöffnungen 28 vorgesehen, die im Englischen als "Cut-Back" bezeichnet werden. Ungefähr mittig zwischen Vorderkante 18 und Hinterkante 20 ist eine erste Reihe 30 von Filmkühlöffnungen 36 zur flächigen Kühlung der Druckseitenwand 24 angeordnet. Ebenso ist druckseitig nahe der Schaufelspitze 32 eine weitere Filmkühlreihe 34 angeordnet. Letztere dient dazu, eine in FIG 1 nicht weiter dargestellte Anstreifkante der Turbinenlaufschaufel 10 über einen Großteil ihrer Längserstreckung zwischen Vorderkante 18 und Hinterkante 20 zu kühlen. Nachfolgend wird die Geometrie der erfindungsgemäßen Filmkühlöffnungen der Reihen 30 und 34 im Detail näher erläutert.

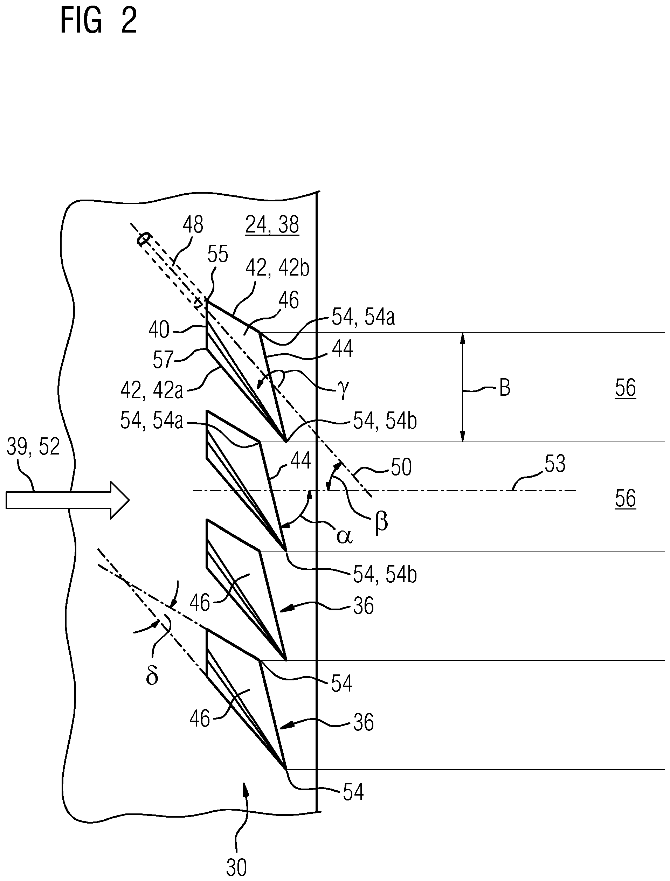

FIG 2 zeigt eine Draufsicht auf einen Ausschnitt der ersten Reihe 30 erfindungsgemäßer Filmkühlöffnungen 36, die in einer einem Heißgas 39 aussetzbaren Oberfläche 38 der Turbinenlaufschaufel 10 münden. Die Reihe 30 zeigt im dargestellten Ausführungsbeispiel lediglich vier Filmkühlöffnungen 36. Die Anzahl der Filmkühlöffnungen 36 innerhalb der Reihe kann jedoch variieren und ist für die Wirkung der Erfindung prinzipiell unerheblich, solange zumindest zwei Filmkühlöffnungen 36 vorhanden sind. Die Abstände zwischen den Filmkühlöffnungen 36 sind dabei jeweils identisch.

Entlang der Oberfläche 38 der Druckseitenwand 24 ist das Heißgas 39 in der dargestellten Richtung strömbar. Die lokale wandnahe Strömungsrichtung 52 ist somit parallel zur Achse 53.

Jede Filmkühlöffnung 36 umfasst einen Diffusorabschnitt 46, der von einer stromauf angeordneten Diffusorkante 40, zwei Diffusorlängskanten 42 sowie einer stromab angeordneten Diffusorkante 44 begrenzt ist. Stromauf des Diffusorabschnitts 46 umfasst jede Filmkühlöffnung 36 einen Kanalabschnitt 48, wobei dieser jedoch nur bei der obersten der vier dargestellten Filmkühlöffnungen 36 gezeigt ist. Im Kontext des Diffusorabschnitts beziehen sich die Begriffe "stromauf" und "stromab" auf die Strömungsrichtung des Heißgases.

Dabei trifft jede Diffusorlängskante 42 mit der stromab angeordneten Diffusorkante 44 in einem Eckbereich 54 zusammen, so dass gemäß FIG 2 jede Diffusorabschnitte 46 einen oberen Eckbereich und einen unteren Eckbereich 54 aufweist. Die relativen Angaben "oben" und "unten" sowie die weiter unten erwähnten Angaben "links" und "rechts" beziehen sich lediglich auf die hier bereitgestellten Darstellungen und nicht auf die Lage der Eckbereiche im fertig hergestellten Gasturbinenbauteil. Weiterhin beziehen sich die Angaben "radial" und "axial" auf die Maschinenachse einer nicht weiter dargestellten Gasturbine. Insofern sind diese Angaben als nicht einschränkend zu verstehen, vielmehr dienen sie ausschließlich zur Erläuterung der Erfindung.

Die stromauf angeordnete Diffusorkante 40 ist kürzer als die stromab angeordnete Diffusorkante 44 ausgebildet, so dass der von den Diffusorkanten 40, 42, 44 eingeschlossene Bereich einen Diffusor bildet für die aus dem Kanalabschnitt 48 ausströmende und in den Diffusorabschnitt 46 einströmende Kühlluft, so dass innerhalb des Diffusors die eher punktuell zugeführte Kühlluft auf die Region zwischen den beiden Eckbereichen 54 verteilt wird. Der Öffnungswinkel δ des Diffusors ist zwischen den beiden Diffusorlängskanten 42 eingeschlossen und beträgt in diesem Ausführungsbeispiel etwa 20°.

Im gezeigten Ausführungsbeispiel hat das Volumen des Diffusors die Form eines halbseitigen Pyramidenstumpfes mit einem Öffnungswinkel von jeweils 10°. Das bedeutet, dass die drei schrägen Diffusorflächen sich somit um einen Winkel von 10° zur Kanalachse 50 öffnen, die Symmetriefläche der halben Pyramide mit 0°.

Gemäß dem gezeigten Ausführungsbeispiel treffen bei jeder Filmkühlöffnung 36 die obere Längskante 42b und die stromab angeordnete Diffusorkante 44 in einem stumpfen Winkel aufeinander, während die untere Längskante 42a und die stromab angeordnete Diffusorkante 44 in einem spitzen Winkel aufeinander treffen: der obere Eckbereich 54 ist mithin stumpfwinklig und der untere Eckbereich 54 spitzwinklig. Dabei ist es selbstverständlich, dass die Eckbereiche 54 nicht zwingend als Ecke ausgebildet sein müssen. Folglich sind auch leicht abgerundete Eckbereiche möglich. In Bezug auf die Kanalachse 50 bzw. deren Verlängerung ist der Diffusorabschnitt 46 somit asymmetrisch.

Ebenso wie die in FIG 2 zuoberst dargestellte Filmkühlöffnung 36 weist auch jede andere Filmkühlöffnung 36 einen oberen Eckbereich 54a und einen unteren Eckbereich 54b auf.

Dabei ist die untere Längskante 42a diejenige der beiden Längskanten, die aufgrund der lateralen Anstellung auch vom Heißgas 39 angeströmt wird. Diese kann folglich auch als anströmseitige Längskante bezeichnet werden, wobei der Diffusor im Eckbereich 57 von der unteren Längskante 42a und der stromauf angeordneten Diffusorkante 40 tiefer in die Oberfläche 38 versenkt ist als im Eckbereich 55 von der oberen Längskante 42b und der stromauf angeordneten Diffusorkante 40.

Im Betrieb wird das Kühlmittel, vorzugweise Kühlluft, von einer nicht dargestellten kaltgasseitigen Oberfläche des zu kühlenden Gasturbinenbauteils 8 durch den Kanalabschnitt 48 einschließlich durch den Diffusorabschnitt 46 bis zur Oberfläche 38 der zu kühlenden Bauteilwand geführt. Erfindungsgemäß sind nun bei zwei unmittelbar benachbarten Filmkühlöffnungen 36 deren unmittelbar benachbarten Eckbereiche 54 so ausgestaltet, dass der eine (hier spitzwinklige) Eckbereich 54b einer ersten (in FIG 2 zuoberst dargestellten) Filmkühlöffnungen 36 in Bezug auf die Strömungsrichtung 52 des Heißgases gesehen, stromab des anderen (hier spitzwinkligen) Eckbereichs 54a der unterhalb davon angeordneten Filmkühlöffnung 36 angeordnet ist. Vorzugsweise gilt dies für die gesamte Reihe der Filmkühlöffnungen 36. Selbstverständlich können auch zwei oder mehr Reihen hintereinander im erfindungsgemäßen Gasturbinenbauteil angeordnet sein.

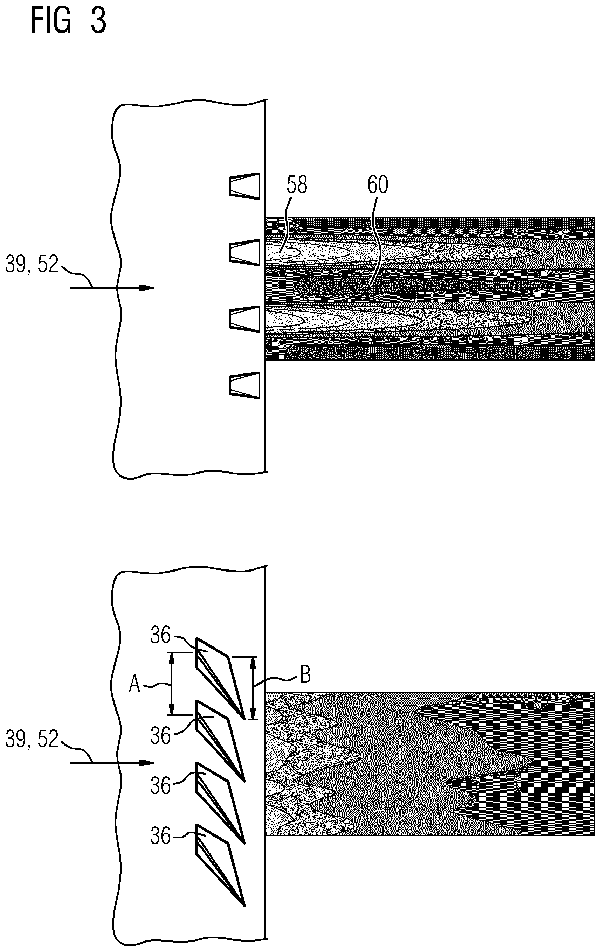

FIG 3 zeigt die Verteilung der Filmkühleffektivität stromab der Filmkühlöffnungen einerseits für die im Stand der Technik bekannten Filmkühlöffnungen mit symmetrischem Diffusor (in FIG 3 oben dargestellt) und andererseits für die erfindungsgemäßen Filmkühlöffnungen 36 (in FIG 3 unten dargestellt). Die im Stand der Technik anfänglich vorhandenen Kühlluftsträhnen 58 einer jeden Filmkühlöffnung können durch die erfindungsgemäße Anordnung vermieden werden. Senkrecht zur Strömungsrichtung 52 des Heißgases 39 betrachtet ist das Temperaturprofil stromab der erfindungsgemäßen Filmkühlöffnungen 36 viel gleichmäßiger als im Stand der Technik. Dies führt dazu, dass eine flächige und somit von Heißgassträhnen 60 weitestgehend befreite Filmkühlströmung sich viel näher an der stromabwärtigen Diffusorkante 44 ausbilden kann als im Stand der Technik.

Die Filmkühlöffnungen 36 und somit insbesondere deren Kanalabschnitte 48 können durch spanabhebendes Bohren, Laserbohren oder auch durch Erodieren oder auch anderweitig hergestellt worden sein. Die Querschnittsform des Kanalabschnitts 48 ist häufig kreisrund. Andere Formen des Durchströmungsquerschnitts sind ebenso denkbar. Der Kanalabschnitt 48 ist in der Regel entlang seiner Kanalachse 50 gradlinig ausgebildet, wobei die Kanalachse 50 als virtuelle Größe sich bis zum stromabwärtigen Ende des Diffusorabschnitts 46 und darüber hinaus geradlinig verlängert.

Erneut bezugnehmend auf FIG 2 kennzeichnen sich die erfindungsgemäßen Filmkühlöffnungen 36 dadurch, dass die Kanalachse 50 gegenüber der lokalen Strömungsrichtung 52 des Heißgases 39 um einen Anstellwinkel β lateral angestellt ist und einander benachbarter Filmkühlöffnungen 36 sich nicht berühren. In Experimenten hat sich gezeigt, dass ein Anstellwinkel von β = 50° besonders vorteilhaft ist. Jedoch ist dieser Wert nicht einschränkend, so dass er aufgrund von anders gewählten Randbedingungen auch davon abweichen kann.

Gegenüber den im Stand der Technik bekannten (siehe FIG 3 oben dargestellten) Filmkühlöffnungen mit symmetrischem Diffusorabschnitt sind die erfindungsgemäßen Diffusorabschnitte asymmetrisch. Die Asymmetrie erfolgt durch eine Verdrehung des Diffusors um die Kanalachse 50. Bei den Experimenten hat sich auch herausgestellt, dass die Verdrehung um einen Drehwinkel γ mit einer Größe von 15° besonders vorteilhaft ist. Die Verdrehung des Diffusors kann auch dadurch beschrieben werden, dass der Diffusorabschnitt 46 dem Abdruck eines Diffusorvolumens von der Form eines halbseitigen Pyramidenstumpfes gleicht und dessen Drehung um die Kanalachse 50 um den Drehwinkel γ erfolgt.

Aufgrund der asymmetrischen Ausgestaltung des Diffusorabschnitts 46, des Anstellwinkels ß, des gewählten Verdrehwinkels γ und einem nicht weiter bezeichneten stumpfen Oberflächenwinkel einer Diffusorgrundfläche 37 zur Oberfläche 38 ist die stromab angeordnete geradlinige Diffusorkante 44 nicht senkrecht zur Strömungsrichtung 52 des Heißgases 39 ausgerichtet, sondern in diesem Ausführungsbeispiel in einem Winkel α von etwa 75°. Dies hat zur Folge, dass - bezogen auf die Strömungsrichtung 52 des Heißgases 39 - der stumpfwinklige Eckbereich 54 stromauf des spitzwinkligen Eckbereichs 54 angeordnet werden kann. Hierdurch lässt sich der Abstand zweier unmittelbar benachbarter Filmkühlöffnungen so wählen, dass die beiden besagten Eckbereiche 54 besagter Filmkühlöffnungen 36 in Strömungsrichtung 52 des Heißgases gesehen fluchten können, ohne dass sich deren Diffusorabschnitte berühren. Dies hat zur Folge, dass die senkrecht zur Heißgasströmungsrichtung 52 erfassbare Breite B (FIG 3) der stromab angeordneten Diffusorkanten 44 jeder einzelnen Filmkühlöffnung und somit die damit erzeugbaren Kühlluftsträhnen 56 so groß sein können, dass letztere sich unmittelbar stromab der Diffusorabströmkanten 44 tangieren und ggf. sogar geringfügig überlappen, ohne dass eine höhere Dichte an Filmkühlöffnungen dafür erforderlich ist. Eine höhere Dichte würde durch die Verkleinerung des Abstands A (vgl. FIG 3) erreicht werden.

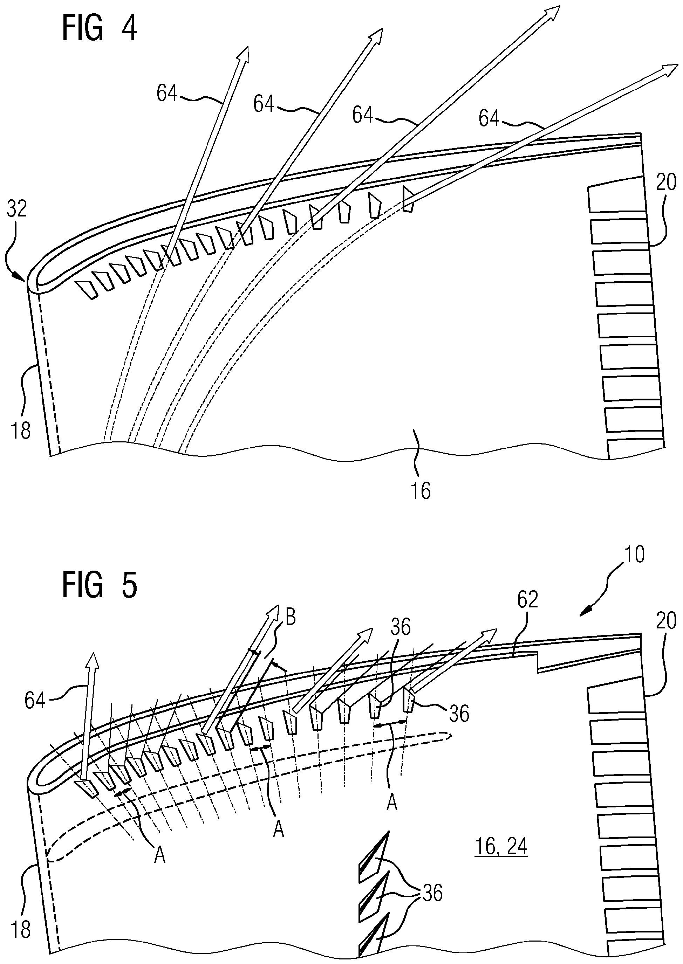

FIG 4 zeigt eine perspektivische Darstellung des Schaufelblatts 16 der Turbinenlaufschaufel 10 bei dem die lokal unterschiedlichen wandnahen Strömungsrichtungen des Heißgases an der Schaufelspitze durch Pfeile 64 repräsentiert sind. Mit zunehmender Annäherung an die Hinterkante 20 des Schaufelblatts 16 weisen die an der Schaufelspitze 32 auftretenden lokalen wandnahen Heißgasströmungen 64 eine größere axiale Strömungskomponente auf als in der Nähe der Vorderkante 18. Folglich sind näher an der Vorderkante 18 angeordnete Heißgasströmungen 64 mehr in Radialrichtung orientiert als in axialer Richtung.

Unter Berücksichtigung der lokalen Heißgasströmungsrichtungen an der Schaufelblattspitze und der Erkenntnis, dass mit Hilfe der erfindungsgemäßen Filmkühlöffnungen 36 eine flächig lückenlose Filmkühlung wesentlich näher an der stromab angeordnete Kante 44 des Diffusorabschnitts 46 bereitgestellt werden kann als im Stand der Technik, eignet sich diese Anordnung besonders zur Kühlung einer Anstreifkante 62 des Schaufelblatts 16 (FIG 5).

Bei der erfindungsgemäßen Filmkühlreihe 34, die radial in nahezu konstantem Abstand zur Anstreifkante 62 angeordnet ist, können dadurch die Filmkühlöffnungen 36 längs der Profilsehne in einem Abstand A verteilt sein, der mit Annäherung der Position der Filmkühlöffnungen 36 zur Hinterkante 20 sich vergrößert. Aus FIG 5 ist ersichtlich, dass die stumpfwinkligen Eckbereiche 54 einer ersten, hier nun weiter links liegenden Filmkühlöffnung 36 und die spitzwinkligen Eckbereiche 54 der unmittelbar rechts dazu benachbarten (zweiten) Filmkühlöffnung so zueinander angeordnet sind, dass die aus der ersten Filmkühlöffnung 36 austretende Kühlluftströmung die Kühlluftströmung der zweiten Filmkühlöffnung 36 zumindest tangiert. Auch in bei den Filmkühlöffnungen 36 der Reihe 34 sind die Kanalachsen 50 der Filmkühlöffnungen 36 jeweils um ca. 50° relativ zu der sich lokal ändernden Richtung der wandnahen Heißgasströmung angestellt, so dass mit Annäherung an die Hinterkante 20 die Orientierung der betreffenden Kanalachsen 50 sich auch ändert. Aufgrund der gewählten Perspektive der Darstellung in FIG 5 und der gewölbten Oberfläche der Druckseite schaut der Betrachter nicht überall senkrecht auf die Oberfläche, sondern teilweise vielmehr tangential. Dadurch können die angedeuteten Anstellwinkel anders wahrgenommen werden. Dennoch lässt sich dadurch ein Kühlfilm bereitstellen, der in Richtung der Filmkühlreihe betrachtet weitestgehend lückenfrei ist. Technisch korrekt ausgedrückt bedeutet dies, dass in den Orten stromab der stromab angeordneten Diffusorkante 44 und dazwischen die Unterschiede zwischen den lokalen Temperaturen signifikant verringert werden können.

Insbesondere durch die vorgenannte Ausgestaltung lassen sich die Anstreifkanten 62 von Turbinenlaufschaufeln 10 vor den schädlichen Einflüssen des Heißgases schützen und somit deren Lebensdauer signifikant verlängern, ohne dass es zu den im Stand der Technik erwähnten Verschleißerscheinungen gelangt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Beispielsweise kann das Gasturbinenbauteil als Ringsegment einer Heißgaskanalwand oder auch als Brennkammerwand der Gasturbine ausgestaltet sein.

## Patentansprüche

1. Filmgekühltes Gasturbinenbauteil (8) für eine Gasturbine,
mit einer einem Heißgas (39) aussetzbaren Oberfläche (38), in der eine Anzahl von Filmkühlöffnungen (36) münden, die in einer Richtung quer zu einer Strömungsrichtung (52) des Heißgases (39) zu zumindest einer Reihe (30, 34) zusammenfassbar sind,
wobei jede der betreffenden Filmkühlöffnungen (36) längs seiner Durchströmungsrichtung einen Kanalabschnitt (48) und einen sich an den Kanalabschnitt (48) unmittelbar anschließenden Diffusorabschnitt (46) umfassend eine stromauf angeordnete Diffusorkante (40), zwei Diffusorlängskanten (42) und eine stromab angeordnete Diffusorkante (44) aufweisen,
wobei jede Diffusorlängskante (42) mit der stromab angeordneten Diffusorkante (44) in einem Eckbereich (54) zusammentrifft,
**dadurch gekennzeichnet,**
**dass** zumindest zwei unmittelbar benachbarte, vorzugweise alle Filmkühlöffnungen (36) der betreffenden Reihe (30, 34) so ausgestaltet sind,
**dass** deren Kanalachsen (50) der jeweiligen Kanalabschnitte (48) gegenüber der lokalen Strömungsrichtung (52) des Heißgases (39) lateral angestellt sind und deren Diffusorabschnitte (46) jeweils derart asymmetrisch gegenüber einer Verlängerung der Kanalachse (50) ausgebildet sind, dass die unmittelbar benachbarten Eckbereiche (54) der betreffenden Filmkühlöffnungen (36) in Strömungsrichtung (52) des Heißgases (39) betrachtet fluchten oder überlappen, ohne dass die betreffenden Diffusorabschnitte (46) sich berühren.

2. Gasturbinenbauteil (8) nach Anspruch 1,
bei dem die betreffenden Diffusorabschnitte (46) Abdrücke eines Diffusorvolumens von der Form eines halbseitigen Pyramidenstumpfes gleichen, dessen Volumen zur Ausbildung der Asymmetrie um einen Verdrehwinkel (γ) um die Kanalachse (50) gedreht ist.

3. Gasturbinenbauteil nach Anspruch 2,
bei dem die Verdrehwinkel (γ) etwa 15° beträgt.

4. Gasturbinenbauteil (8) nach Anspruch 1, 2 oder 3,
bei dem die stromauf angeordnete Diffusorkante (40), die eine oder beiden Längskanten (42) und/oder die stromab angeordnete Diffusorkante (44) des betreffenden Diffusorabschnitts (46) im Wesentlichen geradlinig sind.

5. Gasturbinenbauteil (8) nach Anspruch 3,
bei dem die stromab angeordnete Diffusorkante (44) des betreffenden Diffusorabschnitts (46) mit der lokalen Heißgasströmungsrichtung einen Winkel (α) einschließt, der von 90° abweicht.

6. Gasturbinenbauteil (8) nach einem der Ansprüche 1 bis 5,
bei dem die betreffenden Kanalachsen (50) gegenüber der globalen Strömungsrichtung (52) des Heißgases (39) um einen Anstellwinkel (ß) von etwa 50° angestellt sind.

7. Gasturbinenbauteil (8) nach einem der Ansprüche 1 bis 6, welches als gekühlte Turbinenlaufschaufel (10) ausgestaltet ist, mit einem aerodynamisch profilierten Schaufelblatt (16), welches Schaufelblatt (16) eine Saugseitenwand (22) und eine Druckseitenwand (24) umfasst, die sich beide - in Bezug auf Profilsehnen des Schaufelblatts (16) - von einer Vorderkante (18) des Schaufelblatts (16) zu einer Hinterkante (20) des Schaufelblatts (16) und - in Bezug auf eine Radialrichtung - von einem nabenseitigen Ende (17) zu einer frei endenden Schaufelblattspitze (32) erstrecken,
wobei an der Schaufelblattspitze (32) zumindest druckseitig eine Anstreifkante (62) vorgesehen ist,
wobei zumindest eine der Reihen von Filmkühlöffnungen (36) druckseitig, längs der Profilsehne in nahezu konstantem Abstand zur Anstreifkante (62) zu deren Kühlung verteilt sind.

8. Turbinenlaufschaufel (10) nach Anspruch 7, bei der mit geringer werdendem Abstand zu der Hinterkante (20) die Abstände (A) zwischen zwei unmittelbar benachbarten Filmkühlöffnungen (36) zunehmen.

9. Turbinenschaufel (10) nach Anspruch 7 oder 8, bei der mit geringer werdendem Abstand zu der Hinterkante (20) die Kanalachsen (50) sich immer mehr zur Hinterkante (20) neigen.

## Claims

1. Film-cooled gas turbine component (8) for a gas turbine, having a surface (38) which can be exposed to a hot gas (39) and in which a number of film-cooling openings (36) open out, which film-cooling openings can be combined to form at least one row (30, 34) in a direction transverse to a flow direction (52) of the hot gas (39),
wherein each of the respective film-cooling openings (36) has, along its throughflow direction, a duct section (48) and a diffuser section (46) directly adjoining the duct section (48), which diffuser section comprises an upstream diffuser edge (40), two diffuser longitudinal edges (42) and a downstream diffuser edge (44), wherein each diffuser longitudinal edge (42) intersects the downstream diffuser edge (44) at a corner region (54), **characterized**
**in that** at least two immediately adjacent film-cooling openings (36), preferably all film-cooling openings (36), of the respective row (30, 34) are designed such that their duct axes (50) of the respective duct sections (48) are laterally inclined relative to the local flow direction (52) of the hot gas (39) and their diffuser sections (46) are formed in each case asymmetrically with respect to a projection of the duct axis (50), in such a way that the immediately adjacent corner regions (54) of the respective film-cooling openings (36) are in alignment, or overlap, as viewed in the flow direction (52) of the hot gas (39), without the respective diffuser sections (46) making contact with one another.

2. Gas turbine component (8) according to Claim 1,
in which the respective diffuser sections (46) equate to impressions of a diffuser volume in the shape of a halved truncated pyramid, the volume of which is rotated through an angle of rotation (γ) about the duct axis (50) in order to form the asymmetry.

3. Gas turbine component according to Claim 2,
in which the angle of rotation (γ) amounts to approximately 15°.

4. Gas turbine component (8) according to Claim 1, 2 or 3,
in which the upstream diffuser edge (40), the one or two longitudinal edges (42), and/or the downstream diffuser edge (44), of the respective diffuser section (46) are substantially rectilinear.

5. Gas turbine component (8) according to Claim 3,
in which the downstream diffuser edge (44) of the respective diffuser section (46) encloses an angle (α), which differs from 90°, with the local hot-gas flow direction.

6. Gas turbine component (8) according to one of Claims 1 to 5,
in which the respective duct axes (50) are inclined by an angle of inclination (β) of approximately 50° with respect to the global flow direction (52) of the hot gas (39) .

7. Gas turbine component (8) according to one of Claims 1 to 6,
which is designed as a cooled turbine rotor blade (10), having an aerodynamically profiled blade airfoil (16), which blade airfoil (16) comprises a suction-side wall (22) and a pressure-side wall (24) which both - in relation to profile chords of the blade airfoil (16) - extend from a leading edge (18) of the blade airfoil (16) to a trailing edge (20) of the blade airfoil (16) and - in relation to a radial direction - extend from a hub-side end (17) to a freely ending blade airfoil tip (32), wherein, on the blade airfoil tip (32), at least on the pressure side, there is provided a rubbing edge (62), wherein at least one of the rows of film-cooling openings (36) is distributed at the pressure side along the profile chord at an approximately constant distance from the rubbing edge (62) for the cooling thereof.

8. Turbine rotor blade (10) according to Claim 7,
in which, with decreasing distance from the trailing edge (20), the spacings (A) between two immediately adjacent film-cooling openings (36) increase.

9. Turbine blade (10) according to Claim 7 or 8,
in which, with decreasing distance from the trailing edge (20), the duct axes (50) are slanted to an increasing degree with respect to the trailing edge (20).

## Revendications

1. Elément (8) de turbine à gaz à refroidissement pelliculaire pour une turbine à gaz,
comprenant une surface (38), qui peut être soumise à un gaz (39) chaud et dans laquelle débouchent un certain nombre d'ouies (36) de refroidissement pelliculaire, qui, dans une direction transversalement à un sens (52) d'écoulement du gaz (39) chaud, peuvent être rassemblées en au moins une rangée (30, 34),
dans lequel chacune des ouies (36) de refroidissement pelliculaire concernée a, suivant son sens d'écoulement, une partie (48) de canal et une partie (46) de diffuseur se raccordant directement à la partie (48) de canal et comprenant un bord (40) de diffuseur en amont, deux bords (42) longitudinaux de diffuseur et un bord (44) de diffuseur en aval, chaque bord (42) longitudinal de diffuseur rencontrant, dans une région (54) de coin, le bord (44) de diffuseur en aval,
**caractérisé**
**en ce qu'**au moins deux ouies (36) de refroidissement pelliculaire, directement voisines, de préférence toutes les ouies (36) de la rangée (30, 34) concernée, sont conformées,
de manière à ce que leurs axes (50) de canal des parties (48) de canal respectives soient mis latéralement par rapport au sens (52) d'écoulement local du gaz (39) chaud et de manière à ce que leurs parties (46) de diffuseur soient constituées chacune dissymétriquement par rapport à un prolongement de l'axe (50) du canal, de manière à ce que les régions (54) de coin, voisines directement des ouies (36) de refroidissement pelliculaire concernées, soient, considérées dans le sens (52) d'écoulement du gaz (39) chaud, alignées ou à chevauchement, sans que les parties (46) de diffuseur concernées soient touchées.

2. Elément (8) de turbine à gaz suivant la revendication 1, les parties (46) de diffuseur concernées sont égales à des répliques d'un volume de diffuseur de la forme d'un tronc de pyramide à demi face, dont le volume est, pour constituer la dissymétrie, tourné d'un angle (γ) de torsion autour de l'axe (50) du canal.

3. Elément de turbine suivant la revendication 2,
dans lequel l'angle (γ) de torsion est d'environ 15°.

4. Elément (8) de turbine à gaz suivant la revendication 1, 2 ou 3,
dans lequel le bord (40) de diffuseur en amont, le bord ou les deux bords (42) longitudinaux et/ou le bord (44) de diffuseur en aval, de la partie (46) de diffuseur concernée, sont sensiblement rectilignes.

5. Elément (8) de turbine à gaz suivant la revendication 3,
dans lequel le bord (44) de diffuseur en aval de la partie (46) de diffuseur concernée fait, avec le sens de l'écoulement local de gaz chaud, un angle (α) différent de 90°.

6. Elément (8) de turbine à gaz suivant l'une des revendications 1 à 5,
dans lequel les axes (50) de canal concernés font, avec le sens (52) global d'écoulement du gaz (39) chaud, un angle (β) d'environ 50°.

7. Elément (8) de turbine à gaz suivant l'une des revendications 1 à 6,
conformé en aube (10) mobile de turbine refroidie, ayant une lame (16) d'aube profilée aérodynamiquement, laquelle lame (16) d'aube a un extrados (22) et un intrados (24), qui, tous deux, s'étendent - par rapport à des cordes de profil de la lame (16) d'aube - d'un bord (18) avant de la lame (16) d'aube à un bord (20) arrière de la lame (16) d'aube et - par rapport à une direction radiale - d'une extrémité (17) du côté du moyeu à une pointe (32) de la lame d'aube se terminant librement,
dans lequel il est prévu, sur la pointe (32) de la lame d'aube, au moins du côté de l'intrados, un bord (62) d'attaque,
dans lequel au moins l'une des rangées d'ouies (36) de refroidissement pelliculaire est répartie du côté de l'intrados, le long des cordes de profil, à une distance à peu près constante du bord (62) d'attaque, pour son refroidissement.

8. Aube (10) mobile de turbine suivant la revendication 7,
dans laquelle, à une distance devenant de plus en plus petite vers le bord (20) arrière, les distances (A) entre des ouies (36) de refroidissement pelliculaire, voisines directement, augmentent.

9. Aube (10) de turbine suivant la revendication 7 ou 8,
dans laquelle, à une distance devenant de plus en plus petite par rapport au bord (20) arrière, les axes (50) de canal s'inclinent de plus en plus vers le bord arrière.
